(19) **Europäisches Patentamt / European Patent Office / Office européen des brevets**

(11) **EP 2 006 707 B1**

(12) **FASCICULE DE BREVET EUROPEEN**

(45) Date de publication et mention
de la délivrance du brevet:
**11.08.2010 Bulletin 2010/32**

(51) Int Cl.:
***G01S 1/00*** (2006.01)

(21) Numéro de dépôt: **08290519.1**

(22) Date de dépôt: **05.06.2008**

(54) **Procédé de détermination d'une limite de protection avec compensation des retards de calcul**

Verfahren zur Ermittlung einer Schutzgrenze mit Kompensation von Berechnungsverzögerungen

Method for determining a protection limit with compensation for calculation delays

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.06.2007 FR 0704163**

(43) Date de publication de la demande:
**24.12.2008 Bulletin 2008/52**

(73) Titulaire: **SAGEM DEFENSE SECURITE**
**75015 Paris (FR)**

(72) Inventeurs:
• **Vacher, Charlie**
**75018 Paris (FR)**
• **Ibanez, Guillaume**
**92270 Bois Colombes (FR)**
• **Gavillet, Simon**
**92110 Clichy (FR)**

(74) Mandataire: **Lavialle, Bruno François Stéphane et al**
**Cabinet Boettcher**
**22 rue du Général Foy**
**75008 Paris (FR)**

(56) Documents cités:
**EP-A- 1 462 761     US-A- 5 760 737**
**US-B1- 6 847 893**

• **LEE Y C ET AL: "A performance Analysis of a Tightly Coupled GPS/Inertial System for Two Integrity Monitoring Methods" PROCEEDINGS OF THE INSTITUTE OF NAVIGATION (ION) GPS, XX, XX, 14 septembre 1999 (1999-09-14), pages 1187-1200, XP002382515**
• **DIESEL J ET AL: "GPS/IRS AIME : Certification for Sole Mans and Solution to RF Interference" ION GPS/GNSS, XX, XX, 17 septembre 1996 (1996-09-17), pages 1599-1606, XP002382516**

## Description

La présente invention concerne un procédé de détermination d'une limite de protection autour d'une position d'un corps mobile calculée à partir de données satellitaires. Ce procédé peut notamment être mis en oeuvre lors de la localisation de véhicule, par exemple dans le système de positionnement global connu sous l'acronyme GPS ("Global Positioning System").

ARRIERE PLAN DE L'INVENTION

Classiquement, la localisation d'un véhicule, tel qu'un aéronef, est réalisée à partir, d'une part, de données fournies par une centrale de mesure embarquée (incluant par exemple une centrale inertielle et un baroaltimètre) et, d'autre part, de données issues de signaux satellitaires provenant d'une constellation de satellites en orbite autour de la Terre. Les données issues de signaux satellitaires sont des distances (ou pseudo-distances) séparant l'aéronef des satellites émetteurs des signaux satellitaires. Le traitement combiné de ces données, par exemple au moyen d'un filtre de calcul de type KALMAN, permet de déterminer l'état de l'aéronef, c'est-à-dire notamment une position précise proche de la position réelle de l'aéronef, la vitesse et l'attitude de l'aéronef.

Entre les réceptions de signaux satellitaires, la position de l'aéronef est extrapolée ou estimée à partir des données inertielles appliquées à la dernière position calculée. La position ainsi déterminée est périodiquement recalée à chaque réception de signaux satellitaires.

La précision de la position calculée est toutefois fortement sensible à une défaillance de la constellation de satellites, c'est-à-dire en cas d'une défaillance d'un satellite qui affecterait l'exactitude des données transmises et qui ne serait pas détectée, ou en cas d'une défaillance simultanée ou de défaillances consécutives de deux satellites de la constellation (le risque de défaillance simultanée de trois satellites est tellement faible qu'il est en général négligé).

Il est pour cette raison habituel de fournir au pilote de l'aéronef une limite ou un volume, dit de protection, centré sur la position calculée et représentatif de la précision de cette position en tenant compte du risque de défaillance d'un ou deux satellites. Le volume global de protection est un cylindre d'axe vertical défini par son rayon et sa hauteur usuellement nommés HPL et VPL. La position réelle de l'aéronef, si elle ne coïncide pas exactement avec la position calculée, a une probabilité au plus égale à un seuil de sécurité acceptable (ou risque d'intégrité) de se trouver hors du volume global de protection.

Le calcul du volume de protection suppose de définir le risque d'intégrité en tenant compte de la probabilité d'une absence de défaillance, de la survenue d'une défaillance et de la survenue de deux défaillances de la constellation de satellites. Le calcul du volume de protection correspondant à chaque cas repose sur la distribution statistique de l'erreur de position. Le volume global de protection est déterminé de telle manière que le risque d'intégrité soit au moins égal à la probabilité pour que la position réelle soit dans le volume de protection. Il existe plusieurs méthodes de calcul du volume de protection. Le document US-A-2004239560 décrit une de ces méthodes de calcul.

Le document EP-A-1 462 761 divulgue un procédé de calcul de la distance de protection basé sur l'estimation de la variation d'altitude.

Le traitement des informations nécessaires et le calcul du volume de protection sont cependant relativement longs de sorte que le volume de protection calculé est fourni avec un certain retard à l'utilisateur. En outre, pour des raisons de charge de calcul, le calcul du volume de protection et la réactualisation peuvent être réalisés à une fréquence plus basse que la fréquence d'émission de ces données. Ce choix entraîne un retard entre l'instant de validité du volume de protection et l'instant de réception de l'utilisation du volume de protection par l'utilisateur. Il en résulte que le volume de protection fourni à l'utilisateur n'est en fait pas valide compte tenu de ce retard qu'il convient donc de réduire au minimum sans toutefois pouvoir l'éliminer.

Dans le cadre de l'invention, il a été envisagé d'augmenter le volume de protection avec la vitesse de l'appareil. Cette méthode conduit toutefois à l'obtention d'un volume de protection beaucoup trop grand réduisant la disponibilité de l'aéronef (c'est-à-dire le pourcentage de temps pendant lequel le volume de protection est inférieur à une valeur prédéterminée). En outre, il existe une imprécision sur la vitesse qui risque de fausser le calcul.

OBJET DE L'INVENTION

Un but de l'invention est de proposer un mode de calcul plus fiable d'une limite de protection.

RESUME DE L'INVENTION

A cet effet, l'invention concerne un procédé de détermination à un instant futur $t+\Delta t$ d'une limite de protection $PL_{pos}(t+\Delta t)$ autour d'une position d'un corps mobile calculée à partir de données satellitaires issues d'une constellation de satellites à un instant présent, le procédé comprenant les étapes de :

- choisir un seuil de sécurité sur la position à l'instant futur $P_{ir}$ et répartir ce seuil de sécurité entre un seuil de sécurité sur la position $P_{ir\,pos}$ et un seuil de sécurité sur la vitesse $P_{ir\,vit}$ ;
- déterminer une position et une vitesse du corps mobile à un instant présent t ;
- calculer une erreur statistique sur la position et une erreur statistique sur la vitesse à cet instant présent ;
- à partir de celles-ci et du seuil de sécurité sur la position et du seuil de sécurité sur la vitesse, calculer une limite de protection sur la position à l'instant présent $PL_{pos}$ (t), et une limite de protection sur la vitesse à l'instant présent $PL_{vit}$ (t);

- calculer la limite de protection $PL_{pos}$ (t+$\Delta$t) telle que

$$PL_{pos}\ (t+\Delta t)\ =\ PL_{pos}(t)+PL_{vit}\ (t).\Delta t\ +\ \gamma\frac{\Delta t^2}{2}$$ où $\gamma$ est l'accélération maximale possible du corps mobile.

Ainsi, il est obtenu une limite de protection $PL_{pos}(t+\Delta t)$ relativement faible garantissant le respect du seuil de sécurité sur un horizon de temps égal à dt.

Avantageusement, le seuil de position est supérieur au seuil de sécurité sur la vitesse.

Un seuil de sécurité sur la position plus élevé que le seuil de sécurité sur la vitesse favorise l'obtention d'une faible limite de protection à l'instant futur.

De préférence, les seuils de sécurité sur la position et sur la vitesse à l'instant présent sont tels que $P_{ir} = P_{ir\,pos} + 2\,P_{ir\,vit}$.

Il est ainsi possible d'avoir un faible seuil de sécurité sur la position à l'instant futur.

De préférence alors, le seuil de sécurité sur la position et le seuil de sécurité sur la vitesse à l'instant présent sont égales à environ 80% et 10% respectivement du seuil de sécurité sur la position à l'instant futur.

Cette répartition du seuil de sécurité sur la position à l'instant futur entre les seuils de sécurité sur la position et la vitesse à l'instant présent est un compromis optimal donnant une limite de protection particulièrement faible.

D'autres caractéristiques et avantages de l'invention ressortiront à la lecture de la description qui suit d'un mode de mise en oeuvre particulier, non limitatif, de l'invention.

BREVE DESCRIPTION DES DESSINS

Il sera fait référence aux dessins annexés, parmi lesquels :

- la figure 1 est une représentation schématique d'une constellation de satellites présents au-dessus de l'horizon d'un aéronef,

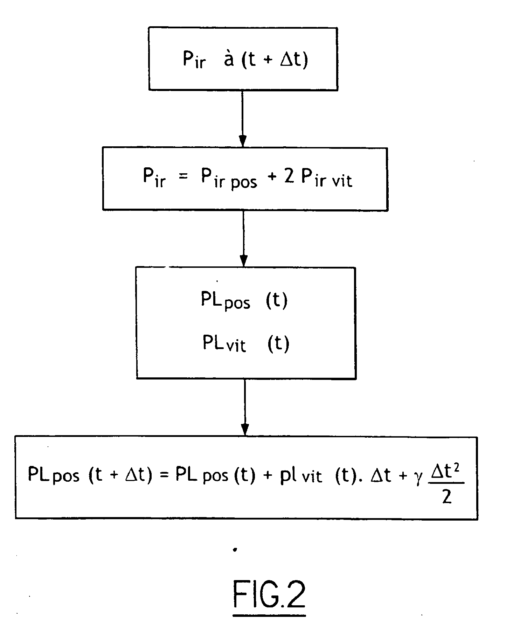

- la figure 2 est une représentation schématique par blocs du procédé selon un mode de mise en oeuvre particulier.

DESCRIPTION DETAILLEE DE L'INVENTION

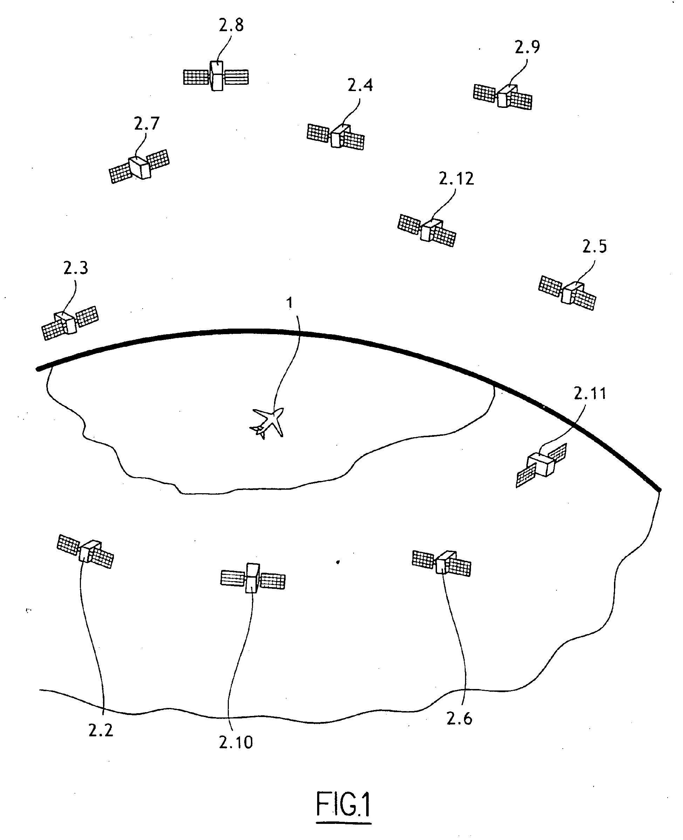

En référence à la figure 1, le procédé de l'invention est ici décrit en relation avec un aéronef 1 embarquant un système de navigation utilisant des données issues de N satellites 2.i (avec i variant de 1 à N, soit 2.1, 2.2, 2.3, 2.4, 2.5, 2.6, 2.7, 2.8, 2.9, 2.10, 2.11, 2.12 sur la figure) en orbite autour de la Terre 100 et des données issues d'une centrale inertielle embarquée sur l'aéronef 1.

La centrale inertielle est connue en elle-même et délivre, à partir de capteurs fixés à l'aéronef 1, des données relatives notamment à l'assiette de l'aéronef 1, sa vitesse...

Les satellites 2.1 à 2.12 font partie d'un ensemble de satellites qui sont positionnés en orbite autour de la Terre et qui appartiennent à un système de localisation par satellites de type GPS. Chaque satellite 2.i émet en permanence un signal comportant sa localisation et l'heure précise d'émission du signal. Les N satellites 2.i émettent ainsi à intervalle régulier N signaux appelés par la suite données satellitaires.

Le système de navigation comprend de façon connue en elle-même une unité de calcul reliée à la centrale inertielle et à un récepteur des signaux issus des satellites. L'unité de calcul incorpore de façon connue en elle-même des processeurs et des mémoires lui permettant de calculer une pseudo-distance séparant l'aéronef 1 de chaque satellite 2.i dont le signal est détecté par le récepteur et de réaliser une fusion de ces pseudo-distances et des données provenant de la centrale inertielle afin de déterminer entre autres une position de l'aéronef 1.

Les calculs sont réalisés de manière connue en elle-même en utilisant des filtres de Kalman ou tout autre algorithme permettant de réaliser notamment une fusion de données.

Le système de navigation fournit ainsi périodiquement un état de l'aéronef, c'est-à-dire une position, une vitesse et une attitude de l'aéronef, à partir des données inertielles et des données satellitaires. La position est définie par une composante horizontale (ici une latitude et une longitude) et une composante verticale (ici une altitude).

Entre deux réceptions de signaux satellitaires, le système de navigation fournit des positions estimées à partir des seules données inertielles (qui sont obtenues continûment) en partant de positions antérieures, cette opération est appelée propagation. A la réception de nouvelles données satellitaires, la position estimée à la réception des données satellitaires est recalée après vérification de la validité desdites données satellitaires.

Pour chaque position estimée, le système fournit également un volume de protection défini par une limite de protection horizontale HPL et une limite de protection verticale VPL calculées à partir des données satellitaires. Pour simplifier, on parle dans la suite de la limite de protection PL (les opérations de calcul de la limite de protection verticale et de la limite de protection horizontale étant sensiblement les mêmes).

Le volume de protection, qui doit être le plus petit possible, est déterminé pour que, si la position réelle de l'aéronef ne coïncide pas exactement avec la position calculée, cette position réelle a une probabilité au plus égale à un seuil de sécurité acceptable de se trouver hors du volume global de protection.

Pour une position donnée, la limite de protection PL est classiquement calculée à partir d'une probabilité de défaillance de la constellation de satellites, d'une probabilité d'absence de défaillance de la constellation de satellites et d'un seuil de sécurité $P_{ir}$ prédéterminé. On a ainsi $p(e \geq PL) \leq P_{ir}$, la probabilité que l'erreur de position e, soit supérieure à la limite de protection PL, est inférieure ou égale au seuil de sécurité $P_{ir}$ acceptable en cas de défaillance de la constellation de satellites (ce seuil de sécurité est également appelé risque d'intégrité). La limite de protection PL est calculée de façon connue en elle-même à partir de la distribution statistique de l'erreur sur la position calculée (distribution gaussienne pour la composante verticale de la position et distribution $\chi^2$ pour la composante horizontale de la position). Le risque d'intégrité $P_{ir}$ ne doit pas être dépassé en cas de panne d'un ou de deux des satellites de la constellation. Une panne de trois satellites de la constellation, qui a une probabilité de $10^{-12}$, est négligée.

Dans le procédé de l'invention, on cherche à fournir une limite de protection valable à un instant futur t+Δt pour une position de l'aéronef à cet instant, soit $PL_{pos}$ (t+Δt). On utilise pour ce faire une position et une vitesse de l'aéronef préalablement déterminées et valables à l'instant présent t. La position peut être déterminée à partir de données satellitaires seules ou en utilisant également des données inertielles. La vitesse peut être déterminée à partir des données satellitaires ou en intégrant des accélérations mesurées par la centrale inertielle.

Il est ensuite calculé une distribution statistique de l'erreur (ou erreur statistique) sur la position à l'instant présent et une distribution statistique de l'erreur sur la vitesse à l'instant présent. Le seuil de sécurité acceptable à l'instant futur est $P_{ir}$ et est réparti entre un seuil de sécurité sur la position $P_{ir\,pos}$ et un seuil de sécurité sur la vitesse $P_{ir\,vit}$ de telle manière que, de préférence, $P_{ir} = P_{ir\,pos} + 2\,P_{ir\,vit}$ et $P_{ir\,pos} = 80\,\%\,P_{ir}$ et $P_{ir\,vit} = 10\%\,P_{ir}$. Cette répartition est optimale, mais d'autres répartition sont possibles.

Une limite de protection sur la position calculée et valide à l'instant présent t, soit $PL_{pos}(t)$, est ensuite calculée à partir de l'erreur statistique sur la position et le seuil de sécurité sur la position $P_{ir\,pos}$.

Une limite de protection sur la vitesse à l'instant présent, soit $PL_{vit}(t)$ est ensuite également calculée à partir de l'erreur statistique sur la vitesse et le seuil de sécurité sur la vitesse $P_{ir\,vit}$. Ces limites de protection $PL_{pos}$ (t) et PLvit (t) sont obtenues par les méthodes de calcul classiques.

La limite de protection sur la position à l'instant futur (t+Δt), soit $PL_{POS}$ (t+Δt) est calculée à partir de la formule suivante :

$$\mathbf{PL_{pos}} \quad \mathbf{(t+\Delta t)} \quad = \quad \mathbf{PL_{pos}(t)} \quad + \quad \mathbf{PL_{vit}} \quad \mathbf{(t).\Delta t} \quad + \quad \gamma\frac{\Delta t^2}{2}$$

où $\gamma$ est l'accélération maximale possible de l'aéronef. $\gamma$ est ici fixée à dix fois l'accélération gravitationnelle, soit $\gamma$ = 10 g.

Il peut être prévu, après le calcul des limites de protection $PL_{pos}(t)$ et $PL_{vit}(t)$, une étape d'optimisation de la répartition du seuil de sécurité $P_{ir}$ pour réduire autant que faire se peut les limites de protection $PL_{pos}(t)$ et $PL_{vit}(t)$ .

A titre d'exemple, on choisit $P_{ir} = 10^{-7}$, $P_{ir\,pos} = 8.10^{-8}$ et $P_{ir\,vit} = 10^{-8}$.

Bien entendu, l'invention n'est pas limitée aux modes de mise en oeuvre décrits mais englobe toute variante entrant dans le cadre de l'invention telle que définie dans les revendications.

Les positions peuvent être estimées à partir de données satellitaires uniquement ou à partir également des données provenant d'une centrale de mesure comme une centrale inertielle.

L'invention est applicable à tout corps mobile comme un véhicule terrestre, marin, ou autre.

La répartition peut être différente de celle décrite, avec par exemple $P_{ir} = 10^{-7}$, $P_{ir\,pos} = 5.10^{-8}$ et $P_{ir\,vit} = 2,5.10^{-8}$. Le seuil de sécurité $P_{ir\,pos}$ peut être égal à 80 % $P_{ir}$ et le seuil de sécurité $P_{ir\,vit}$ peut être égal à 20 % $P_{ir}$ ou tout autre répartition telle que 50% - 50%, 60% - 40%, 70% - 30%.

Une autre valeur pour l'accélération maximale peut être choisie en fonction notamment des performances du véhicule.

**Revendications**

**1.** Procédé de détermination à un instant futur t+Δt d'une limite de protection PL$_{pos}$(t+Δt) autour d'une position d'un corps mobile calculée à partir de données satellitaires issues d'une constellation de satellites à un instant présent t, **caractérisé en ce qu'**il comprend les étapes de :

- choisir un seuil de sécurité sur la position a l'instant futur Pir et répartir ce seuil de sécurité entre un seuil de sécurité sur la position P$_{ir \, pos}$ et un seuil de sécurité sur la vitesse P$_{ir \, vit}$ ;
- déterminer une position et une vitesse du corps mobile à l'instant présent t ;
- calculer une erreur statistique sur la position et une erreur statistique sur la vitesse à cet instant présent ;
- à partir de celles-ci et du seuil de sécurité sur la position et du seuil de sécurité sur la vitesse, calculer une limite de protection sur la position à l'instant présent PL$_{pos}$ (t), et une limite de protection sur la vitesse à l'instant présent PL$_{vit}$ (t);

- calculer la limite de protection PL$_{pos}$ (t+Δt) telle que

$$\mathbf{PL_{pos} \ (t+\Delta t) \ = \ PL_{pos}(t)+PL_{vit} \ (t).\Delta t \ + \ } \gamma\frac{\Delta t^2}{2}$$ où γ est l'accélération maximale possible du corps mobile.

**2.** Procédé selon la revendication 1, dans lequel le seuil de position est supérieur au seuil de sécurité sur la vitesse.

**3.** Procédé selon la revendication 2, dans lequel les seuils de sécurité sur la position et sur la vitesse à l'instant présent sont tels que :

$$\mathbf{P_{ir} \ = \ P_{ir \ pos} \ + \ 2 \ P_{ir \ vit}.}$$

**4.** Procédé selon la revendication 3, dans lequel le seuil de sécurité sur la position et le seuil de sécurité sur la vitesse à l'instant présent sont égales à environ 80% et 10% respectivement du seuil de sécurité sur la position à l'instant futur.

**5.** Procédé selon la revendication 1, dans lequel, après le calcul des limites de protection sur la vitesse et sur la position, est réalisée une étape d'optimisation de la répartition du seuil de sécurité sur la position à l'instant futur pour obtenir de plus faibles limites de protection sur la vitesse et sur la position.

**6.** Procédé selon la revendication 1, dans lequel la position à l'instant futur t+Δt est extrapolée à partir de la position à l'instant présent t.

**7.** Procédé selon la revendication 1, dans lequel l'accélération maximale possible γ est fixée à 10g environ.

**Claims**

**1.** A method of determining for a future instant t+Δt a protection limit PL$_{pos}$(t+Δt) around a position for a moving body, which position is calculated from satellite data coming from a constellation of satellites at a present instant t̲, the method being **characterized in that** it comprises the steps of:

· selecting a safety threshold concerning position at the future instant P$_{ir}$ and distributing this safety threshold between a safety threshold concerning position P$_{ir \, pos}$ and a safety threshold concerning speed P$_{ir \, v}$;
· determining a position and a speed for the moving body at the present instant t̲;
· calculating a statistical error concerning position and a statistical error concerning speed at said present instant;
· on the basis thereof and on the basis of the safety threshold concerning position and the safety threshold concerning speed, calculating a protection limit concerning position at the present instant PL$_{pos}$(t), and a protection limit concerning speed at the present instant PL$_{v}$(t); and

· calculating the protection limit $PL_{pos}(t+\Delta t)$ such that:

$$PL_{pos}(t+\Delta t) = PL_{pos}(t) + PL_v(t).\Delta t + \gamma \frac{\Delta t^2}{2}$$

where $\gamma$ is the maximum possible acceleration of the moving body.

2. A method according to claim 1, in which the position threshold is greater than the safety threshold concerning speed.

3. A method according to claim 2, in which the safety thresholds concerning position and concerning speed at the present instant are such that:

$$P_{ir} = P_{ir\ pos} + 2\ P_{ir\ v}$$

4. A method according to claim 3, in which the safety threshold concerning position and the safety threshold concerning speed at the present instant are equal to about 80% and 10% respectively of the safety threshold concerning position for the future instant.

5. A method according to claim 1, in which, after calculating the protection limits concerning speed and concerning position, an optimization step is performed of distributing the safety threshold concerning position for the future instant so as to obtain smaller protection limits concerning speed and concerning position.

6. A method according to claim 1, in which the position for the future instant $t+\Delta t$ is extrapolated from the position at the present instant t.

7. A method according to claim 1, in which the maximum possible acceleration $\gamma$ is set at about 10 g.


**Patentansprüche**

1. Verfahren zum Bestimmen einer Schutzgrenze $PL_{pos}$ (t+$\Delta$t) um eine Position eines beweglichen Körpers zu einem zukünftigen Zeitpunkt t+$\Delta$t, wobei die Position anhand von Satellitendaten berechnet wird, die von einer Satellitenkonstellation zu einem gegenwärtigen Zeitpunkt t stammen, **dadurch gekennzeichnet, dass** es die Schritte umfasst:

   - Wählen eines Sicherheitsschwellwertes für die Position zu dem zukünftigen Zeitpunkt Pir und Aufteilen dieses Sicherheitsschwellwertes auf einen Sicherheitsschwellwert für die Position Pir pos und einen Sicherheitsschwellwert für die Geschwindigkeit Pir vit,
   - Bestimmen einer Position und einer Geschwindigkeit des beweglichen Körpers zu dem gegenwärtigen Zeitpunkt t,
   - Berechnen eines statistischen Fehlers für die Position und eines statistischen Fehlers für die Geschwindigkeit zu diesem gegenwärtigen Zeitpunkt,
   - Berechnen einer Schutzgrenze für die Position zu dem gegenwärtigen Zeitpunkt $PL_{pos}$ (t) und einer Schutzgrenze für die Geschwindigkeit zu dem gegenwärtigen Zeitpunkt $PL_{vit}$ (t) anhand dieser statistischen Fehler und des Sicherheitsschwellwertes für die Position und des Sicherheitsschwellwertes für die Geschwindigkeit,

   - Berechnen der Schutzgrenze $PL_{pos}$ (t+$\Delta$t) derart, dass

$$PL_{pos}\ (t+\Delta t) = PL_{pos}\ (t) + PL_{vit}\ (t).\Delta t + \gamma\frac{\Delta t^2}{2}, \text{wobei } \gamma \text{ die maximal mögliche Beschleuni-}$$

gung des beweglichen Körpers ist.

**2.** Verfahren nach Anspruch 1, wobei der Positionsschwellwert größer als der Sicherheitsschwellwert für die Geschwindigkeit ist.

**3.** Verfahren nach Anspruch 2, wobei die Sicherheitsschwellwerte für die Position und für die Geschwindigkeit zu dem gegenwärtigen Zeitpunkt derart sind, dass:

$$P_{ir} = P_{ir\ pos} + 2\ P_{ir\ vit}.$$

**4.** Verfahren nach Anspruch 3, wobei der Sicherheitsschwellwert für die Position und der Sicherheitsschwellwert für die Geschwindigkeit zu dem gegenwärtigen Zeitpunkt gleich ungefähr 80% bzw. 10% des Sicherheitsschwellwertes für die Position zu dem zukünftigen Zeitpunkt sind.

**5.** Verfahren nach Anspruch 1, wobei nach der Berechnung der Schutzgrenzen für die Geschwindigkeit und für die Position ein Schritt der Optimierung der Aufteilung des Sicherheitsschwellwerts für die Position zu dem zukünftigen Zeitpunkt durchgeführt wird, um geringere Schutzgrenzen für die Geschwindigkeit und für die Position zu erhalten.

**6.** Verfahren nach Anspruch 1, wobei die Position zu dem zukünftigen Zeitpunkt t+Δt anhand der Position zu dem gegenwärtigen Zeitpunkt t extrapoliert wird.

**7.** Verfahren nach Anspruch 1, wobei die maximal mögliche Beschleunigung γ auf ungefähr 10g festgelegt ist.

2.8

2.9

2.4

2.7

2.12

2.5

2.3

1

2.11

2.2

2.10

2.6

<u>FIG.1</u>

$$P_{ir} \ \grave{a} \ (t + \Delta t)$$

$$P_{ir} = P_{ir\,pos} + 2\,P_{ir\,vit}$$

$$PL_{pos}\ (t)$$

$$PL_{vit}\ (t)$$

$$PL_{pos}\ (t + \Delta t) = PL_{pos}\ (t) + pl_{vit}\ (t).\ \Delta t + \gamma\ \frac{\Delta t^2}{2}$$

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004239560 A
- EP 1462761 A